(19) **Europäisches Patentamt**

**European Patent Office**

**Office européen des brevets**

(11) **EP 0 994 341 B1**

(12) **EUROPEAN PATENT SPECIFICATION**

(45) Date of publication and mention
of the grant of the patent:
**13.04.2005 Bulletin 2005/15**

(51) Int Cl.⁷: **G01N 21/41**

(21) Application number: **99308043.1**

(22) Date of filing: **12.10.1999**

(54) **Method of measuring distribution of internal refractive index for optical fibre preform and measuring device**

Verfahren und Vorrichtung zum Messen des internen Brechungsindex von optischen Fasern

Methode et appareil pour mesurer l'indice de réfraction intern d'une fibre optique

(84) Designated Contracting States:
**CH DE FR GB IT LI NL**

(30) Priority: **12.10.1998 JP 28944598**

(43) Date of publication of application:
**19.04.2000 Bulletin 2000/16**

(73) Proprietors:
• **Sasaki, Issei**
**Sapporo-shi, Hokkaido (JP)**
• **Seiko EG&G Co. Ltd.**
**Koto-ku, Tokyo (JP)**

(72) Inventor: **Sasaki, Issei**
**Sapporo-shi, Hokkaido (JP)**

(74) Representative: **Sturt, Clifford Mark et al**
**Miller Sturt Kenyon**
**9 John Street**
**London WC1N 2ES (GB)**

(56) References cited:
**US-A- 4 519 704        US-A- 4 664 516**
**US-A- 5 365 329**

• **PATENT ABSTRACTS OF JAPAN vol. 16, no. 323 (P-1386), 15 July 1992 (1992-07-15) & JP 04 095847 A (FUJIKURA LTD), 27 March 1992 (1992-03-27)**
• **PATENT ABSTRACTS OF JAPAN vol. 1996, no. 12, 26 December 1996 (1996-12-26) & JP 08 201221 A (FURUKAWA ELECTRIC CO LTD), 9 August 1996 (1996-08-09)**

**EP 0 994 341 B1**

**Description**

The present invention relates to a method of measuring the distribution of internal refractive index for a preform of an optical fibre and a measuring unit.

Optical fibre is important as an information medium supporting intelligent society. The performance of the optical fibre depends on the shape of the refractive index distribution formed at the inside of the fibre. It means that measuring techniques for inspecting the formed structure is essential for adding to the precise control technique of the shape of the refractive index distribution. In this case, the inside of the optical fibre is hard to measure in detail and is large in error because of its extremely thin diameter. Therefore, ordinarily the fibre is measured at the step of preforming (optical fibre perform, hereinafter called preform) which is an intermediate product before wire drawing the optical fibre. The structure of the refractive index for the optical fibre is determined at the inside of the preform by a CVD method, VAD method, and so on. Since the structure of the preform and the structure of the optical fibre are likely to be similar, it is considered that the result of measuring the preform can be applied to the optical fibre by a reduction of scale. The optical fibre is produced by softening the preform with heat and by drawing it to a predetermined diameter.

In the conventional method of measuring the refractive index of the optical fibre preform, the deflection function is found by permeating the measured object with parallel rays or thin laser radiation and by measuring the reflection of the rays received by the distribution of the internal refractive index.

However, if the measured object is large in the change of refractive index, such as a high NA (number of opening) optical fibre preform, the angle of deflection of the transmitted light becomes large so that the light does not come into the sight of a detector. In other words, the rays have a large angle of deflection which is hard to detect and leaks from measurement so that the accuracy of the measurement decreases sharply.

Japanese patent application 04095847, published on 27th March 1992, discloses an arrangement for the high speed measurement of a refractive index distribution in an optical fibre preform. The arrangement makes use of an inclined light line beam which is placed in front of the optical fibre preform and the incident light from the light line beam after passing through the preform is incident upon an image sensor, the output of which is then taken to an image processor for the determination of a distribution in refractive index at the preform.

In US patent 4,519,704 issued on 28th May 1985, the radial profile of a refractive index of an optical fibre preform is derived. This is achieved by illuminating the preform with a collinated beam of light incident at an angle to the axis of the preform differing substantially from 90°, and then measuring the refraction angle at which light leaves a substantially plain end face of the preform as a function of the radial position on the end face. In order to enhance the visual recognition of deviations in the index profile, a line grating is proposed to be employed in front of the optical fibre preform, the lines of which cast a shadow providing a clearer indication of the index profile.

Japanese patent application 08201221, published on 9th August 1996, discloses a method and an apparatus for measuring a refractive index profile of an optical fibre preform with high measuring accuracy. Light from a light source is directed toward the preform from a direction perpendicular to the axial direction of the preform and a light pattern of the emerging light is observed, thereby to measure the profile of the refractive index. The diameter of the incident light may be intermittently changed in an optical path of the light in order to select the optimum diameter of the light. A space filter is used between the light source and the optical fibre preform.

A refractive index value of an optical fibre preform is obtained in US patent 4, 664516, issued on 12th May 1997, by radially scanning the near-field image of the fibre output face and by computing, for each image point, the ratio between a first intensity value, obtained in the presence of a mask, having a transmissivity proportional to the fourth power of the transversal beam coordinate and located in a far field plane, and second intensity value obtained in the absence of such a mask. An automated measurement apparatus for implementing the method is also disclosed.

US 5,365329, issued on 15th November 1994, discloses a method of optically sensing properties, for example, the refractive index profile, of an optical fibre preform. The preform diffracts the illuminating beam into a plurality of beam portions, each corresponding to a respective defraction order. The method comprises the steps of illuminating the preform with an illuminating beam substantially perpendicular to the axis of the preform, moving an aperture so as discriminate a beam portion exiting from the preform and corresponding to a selected defraction order, and then detecting the beam portion.

The present invention addresses the above-mentioned problem of the prior art. An object of the present invention is to provide a method of measuring the distribution of the internal refractive index of an optical fibre preform for enabling the measurement of the distribution of refractive index of high NA optical fibre preform, and a measuring device. Particularly, the present invention provides a new measuring technique which is applicable to difficult preforms currently hard to measure in the conventional method.

A method of measuring the distribution of the internal refractive index for an optical fibre preform according to a first aspect of the present invention is as set forth in claim 1.

In this case, it is desirable that the deflection function be found by a method of ray tracing from the deflected version of the pattern.

2

It is desirable to light the optical pattern element with an incoherent light source.

It is desirable to have a pattern having position data in the optical pattern element where the light generates for the optical pattern element.

A binary pattern of a right-angled triangle can be used for such an optical pattern element. In this case, it is desirable to find a border line of variable density pattern which determines different threshold values partly adapted to the condition of the optical pattern element, to find the whole of the border line combining the found border line, and to find the distribution of deflection of the version from the whole of the border line.

A binary pattern of an isosceles triangle or a pattern in which the hue or wavelength thereof changes continuously can be used for the pattern.

There is provided also a measuring device of the distribution of the internal refractive index for the optical fibre preform according to a second aspect of the present invention, as set forth in claim 8.

In this case, an incoherent light source comprises a light source and a scattering board located at the front of the light source. An electroluminescence board can be used.

The photographing unit is desirable to have a diaphragm for limiting aperture, and a mask or a space filter.

In the present invention, the optical pattern element is located behind the optical fibre preform, which is cylindrical, and has an uneven distribution of refractive index at the inside of the material, and the deflected version of said optical pattern element is photographed through the optical fibre preform. By analyzing the deflected version of said optical pattern element, the deflection function is found and the distribution of the refractive index of the optical fibre preform is found based on the deflection function. Therefore, photographing an optical pattern element is possible so as to photograph the deflected version of the pattern is the preform is a high NA optical fibre preform and the angle of deflection of the permeating rays become large. Therefore, even high NA optical fibre preform, which are difficult to measure by the conventional method, can be measured to obtain the distribution of the refractive index more accurately, and that contributes to the improvement of the performance of the optical fibre so as to contribute to the development of intelligent society.

Embodiments of the present invention will now be described by way of further example only and with reference to the accompanying drawings, in which:-

Figs. 1A and 1B are views for describing a principle of a method of measuring the distribution of the internal refractive index for an optical fibre preform according to the present invention;

Figs 2A and 2B are views showing the location of an embodiment embodying the method of the present invention;

Figs. 3A and 3B are views showing the location of another embodiment embodying the method of measuring of the present invention;

Figs. 4A and 4B are examples of optical pattern elements used for the method of measuring of the present invention, and Fig. 4C is a view showing a photographed picture of the optical pattern element and a border picture for finding the deflection quantity from the photographed picture;

Fig. 5 is a view showing an example of the deflection function;

Fig. 6 is a view showing the distribution of the refractive index found from the deflection function of Fig. 5;

Figs 7A and 7B are examples of other optical pattern elements used for the method of measuring of the present invention, and Fig. 7C is a view showing a photographed picture of the optical pattern element and a border picture for finding a deflection quantity from the photographed picture;

Fig. 8 is a view showing the location of an embodiment of a device using an optical pattern element in which the hue (wavelength) changes;

Fig. 9 is a view showing an example of the photographed picture obtained by the location of Fig. 8;

Fig. 10A is a view showing the location of another embodiment using different colours of light, Fig. 10B is a view showing an example of the ratio of RGB distribution, and Fig. 10C is a view describing the method of presuming a starting position from data of deflection;

Fig. 11 is a view showing the location of an embodiment of a device using an ND filter for an optical pattern element; and

Fig. 12 is a view showing a curve of deflected picture obtained from a photographed picture obtained from the location of Fig. 11.

A principle of the method of measuring the distribution of the internal refractive index for optical fibre preform and an embodiment according to the present invention will be described below.

In the conventional method of measuring the distribution of the refractive index, rays have been applied to a measured object with angle zero degree and the angle of deflection of the rays has been measured by the incline of the rays after permeating, based on the direction of the applied ray. In this method, the deflecting rays vary more widely than the aperture of a detector and so cannot be detected so there is an error.

However, by separating the angle of deflection into $\varnothing_1$ and $\varnothing_2$ ($\varnothing_2$ is the angle of incidence on the measured object to the optical axis and $\varnothing_1$ is the angle of injection from the measured object to the optical axis for every ray), each angle does not become too large by dividing by two, even if the angle is a large angle of deflection. The above-mentioned method can detect rays having a large angle of deflection detected without leakage.

However, although data for generating the position of rays is well known because parallel rays are used in the conventional method, the data must be measured at all times because the data of the method of the present invention is variable. Introducing a new general idea in the present invention, the problem is solved. It means that the optical pattern element is located behind the preform and the deflection of the pattern looked through the preform is used.

In the general expression, the method can regenerate data of the position of a generating point by optical pattern element analysis so that each ray has data of the position of generating point. Thus, as the new problem is solved, even rays being difficult to detect in the prior art and having a large angle of deflection can be caught so as to remove the cause of measuring error.

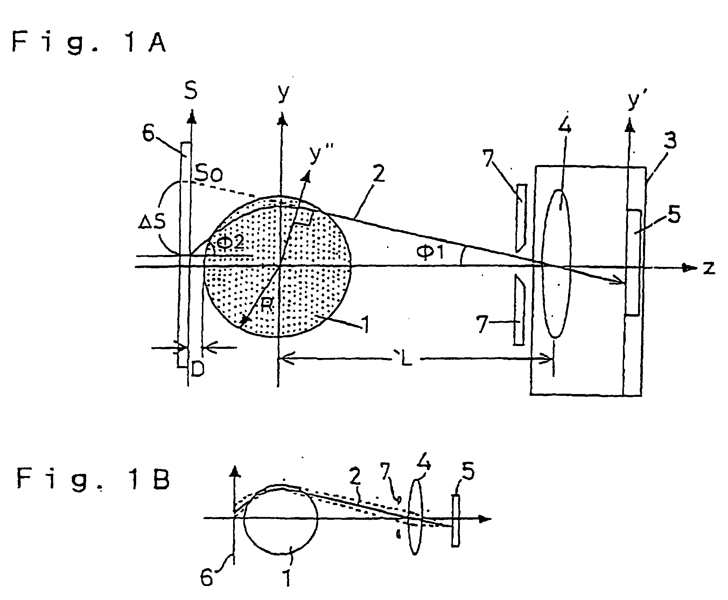

Referring to Figs. 1A and 1B, the principle of the present invention will be described. Fig. 1A shows a state in which an optical pattern element 6 is photographed by an optical pattern element photographing unit (optical pattern element sensor) 3 looking at the image through the measured object (optical fibre preform). For describing, coordinate x is taken to be the axis direction of a preform 1, and the coordinate y and the coordinate z are taken to be at right angles to each other like in the figure.

A ray is generated from the face of the optical pattern element 6 as a (second) light source. S is used for a generating position of the ray. The ray is applied to the optical pattern element photographing unit 3 through a diaphragm 7 after permeating the measured object 1, and a CCD 5 in the unit photographs a projected image. In the figure, an example of the ray is shown as a ray 2. If there is no measured object 1, or the measured object has a value of refractive index the same as the circumference, the ray going to CCD 5 ought to be generated from S=So in the figure. However, if there is an uneven refractive index at the inside of the measured object 1, the ray 2 is deflected as shown in the figure and it is considered that the detected ray 2 is generated from another point as a result. The pattern is photographed with the deflected AS as a result. Then, the projected image with the photographed deflection of the optical pattern element is found by analysis, and the angle of deflection of the ray is presumed from the deflection this time. Angles of the deflection of rays found from various rays are called the deflection function. It is a well known arithmetic technique that deflection function relates to the distribution function of the refractive index (for example, Electron. Lett., 13 pp. 736-738 (1977); J Lightwave Tech., LT-3, pp. 678-683 (1985)). It is well known to find the deflection function by measuring and to find the distribution of the refractive index next by numeric processing of the function.

In other words, particularly the present invention provides a method of measuring the refractive index of an optical fibre preform using a new technique in processing by finding the deflection function and a measuring device.

The deflection function $\phi$ (y") is given by the sum of two angle components. That is:

$$\phi(y") = \varnothing_1 + \varnothing_2 \qquad (1)$$

Here y" is the distance of the ray 2 applied to the optical pattern element photographing unit 3 from the centre of the measured subject (optical fibre preform), $\varnothing_1$ is an angle of incidence to the axis (ray axis) toward the optical pattern element photographing unit 3, and $\varnothing_2$ is an angle of generation of the ray 2 from the optical pattern element 6.

Considering that the optical fibre preform 1 of the measured object ordinarily keeps a generally uniform internal structure in the direction of the x axis, it is defined that $\varnothing_1$ and $\varnothing_2$ are in the same plane, and it is presumed that the S axis is parallel with the y axis. The deflection quantity $\Delta S = So - S$ of the ray 2 at the plane of the optical pattern element 6 and is related to angles $\varnothing_1$ and $\varnothing_2$ of the ray 2 as follows:

$$\Delta S = a \, (\tan \varnothing_1 + \tan \varnothing_2) \qquad (2)$$

Here

$$A = (D+R) - y" \cdot \sin((\varnothing_2 - \varnothing_1)/2) \div \cos((\varnothing_2 + \varnothing_1)/2) \qquad (3)$$

D is a space between the measured object (optical fibre preform) 1 and the optical pattern element 6 looked at through the object, and R is a radius of the measured object (optical fibre preform) 1. Moreover, y" and $\varnothing_1$ are expressed as follows if the distance from a light intercepting lens 4 to the central axis x is represented by L;

$$Y'' = L \cdot \sin \varnothing_1 \qquad (4)$$

$$\varnothing_1 = \tan^{-1} (y/L) \qquad (5)$$

In equation (5), since L is possible to measure and y is possible to read from the projected image photographed, $\varnothing_1$ can be calculated easily. In calculations of equation (2) and equation (3), $\varnothing_2$ can be determined if $\Delta S$ can be measured because D and R are possible to measure. Deflection function $\phi$ (y'') therefore is obtained from $\varnothing_1$ and $\varnothing_2$ found by the ray tracing method and the like using equation (1).

According to the present invention, it is a new idea to write and store data distinguishing the S value, that is generating the position of the ray 2, at the optical pattern element 6. In other words, the generating point of the ray 2 can be presumed by letting the ray 2 itself have position data of the generating point and by reading out the data from the photographed projected image. Thus the above-mentioned matters are all possible to calculate, the deflection function $\phi$ (y'') can be determined, and the distribution of the refractive index is obtained by converting the well known numerical process mentioned above.

Although one ray is described until now, geometric optics of the above-mentioned ray tracing method holds for not only one ray 2 shown in Fig. 1A. If generation from a light source such as EL and so on lighting the optical pattern element 6 does not have directivity, clarity of edge of the photographed projected image deteriorates because various rays come in the range determined by the aperture of light intercepting lens 4 as shown in Fig. 1B. To solve the problem, detected rays are limited in the range of paraxial rays so as to approximate well with the above-mentioned geometric optics by sufficiently limiting the diaphragm 7 of the photographing unit 3 or by attaching a space filter or a mask selecting only the rays permeating in a centre portion at the position of the main rays of the lens 4.

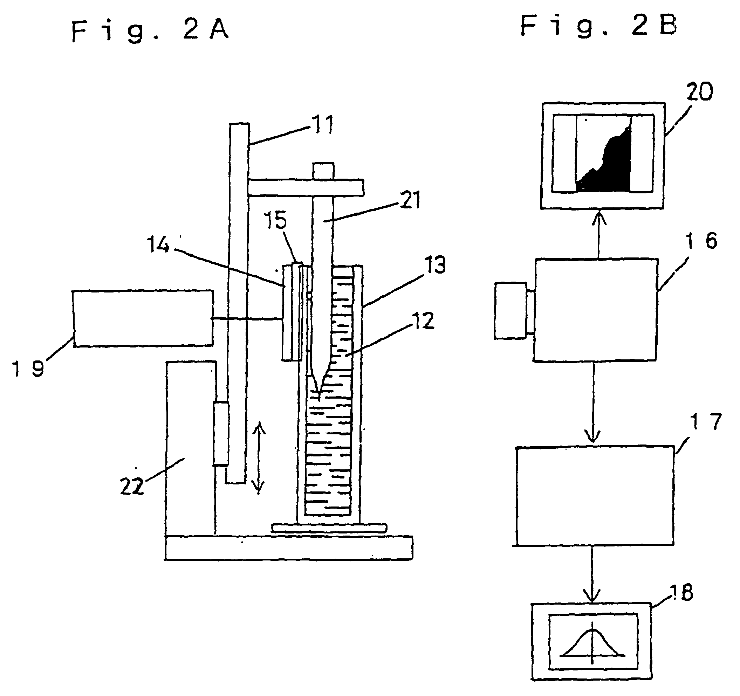

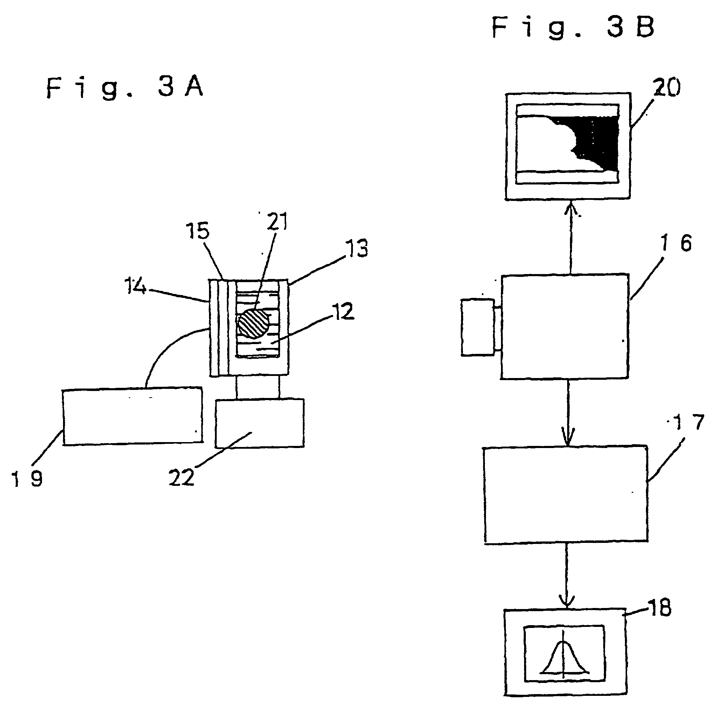

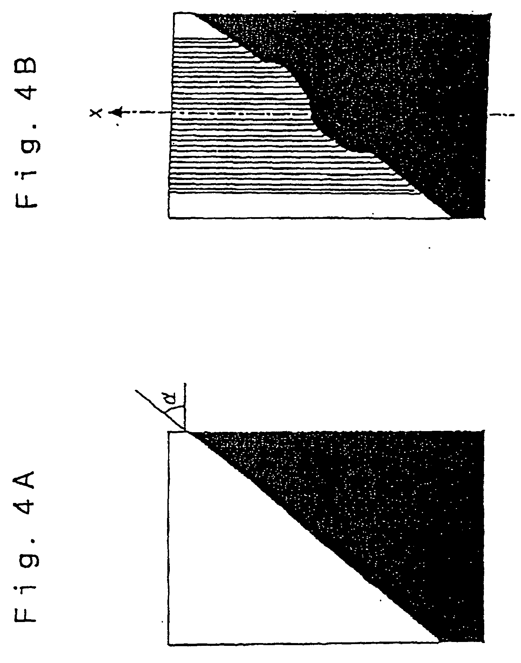

Figs. 2A, 2B, 3A and 3B show embodiments of devices embodying the method of the present invention. Figs. 2A and 2B show an example in which a preform 21 is located vertically, and Figs. 3A and 3B show examples in which a preform 21 is located horizontally. Both of Figs. 2A and 3A are side views of the devices. In the figures, symbol 11 is a column, symbol 12 is a matching liquid of refractive index, symbol 13 is a cell for containing the matching liquid of refractive index, symbol 14 is an electroluminescence (EL) board, symbol 15 is an optical pattern element, symbol 16 is a photographing unit, symbol 17 is a computer, symbol 18 is a display unit of the result of the processing, symbol 19 is a power supply for the EL, symbol 20 is a monitor of the projected image, symbol 21 is an optical fibre preform, and symbol 22 is a driving stage for the x axis. In the embodiment of Fig. 2A, the preform 21 is fixed vertically at the column 11 and a part of the measured object is dipped in the cell 13 filled with the matching liquid of refractive index 12. In the embodiment of Fig. 3A, it is required that the whole of the preform 21 or at least a measured portion is bathed in the matching liquid of refractive index 12 and that the cell 13 of matching liquid of refractive index has a plain transparent window of a size to taking out the rays without trouble, though the whole of the preform 21 is bathed in the matching liquid of refractive index 12.

In any case, in these embodiments the optical pattern element 15 lighted by the electroluminescence (EL) board 14 is located behind the preform 21, and the pattern is read into the computer 17 by the photographing unit 16 as a digital pattern. The power supply 19 is formed for driving the EL board 14.

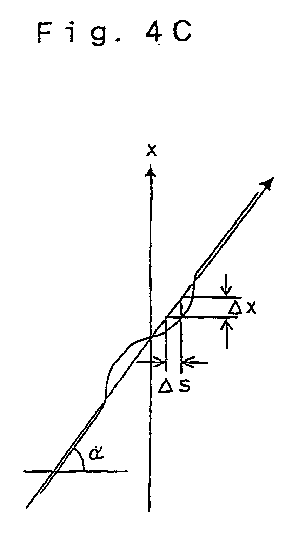

It is desirable that the pattern can distinguish clearly any deflection by the distribution of the internal refractive index of the preform for the optical pattern element 15. Fig. 4A describes the case in which two values of a (black and white) representation of a right-angled triangle is used as an example of the pattern. A portion of the transformation in which the dark portion projects to a bright portion and a portion of the transformation in which the bright portion projects to a dark portion appears because the border between the dark portion and the bright portion of the long side of the right-angle triangle is transformed by the refractive index and the deflection function generally involves rotation symmetry centering on the original point as shown in Fig. 4B.

If the ray is deflected and the position of the generating point deflected is AS as shown in Fig. 4C, the deflection is converted to the x axis using $\Delta x = \Delta S \cdot \tan\alpha$ if $\alpha$ is used for the inclination angle of the long side of the right-angled triangle. Then, if the edge of the long side of the right-angled triangle is taken out by pattern processing as a border line of variable density and the deflection quantity $\Delta x$ of the x direction of the border line, $\Delta S$ is determined by the following equation:

$$\Delta S = \Delta x/\tan\alpha \qquad (6)$$

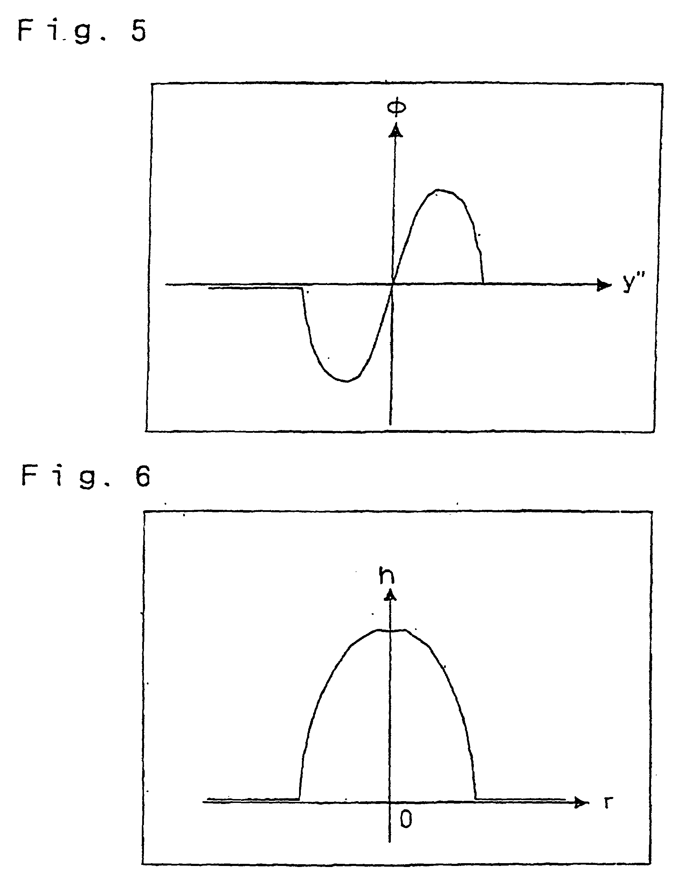

Using the value for calculations of equation (1) to equation (5), the deflection function $\phi$ (y'') is found. The example of the function is shown in Fig. 5. Using the function, the distribution of refractive index n (r) is obtained by applying the following conversion equation.

$$n(r) = n_1 [1 - (1/\pi) \Delta_{r}^{k} \{\phi(y'')\} / \{\Delta (y''^2 - r^2)\} dy'']$$  (7)

Here, $n_1$ is the refractive index of the circumference (the matching liquid of refractive index 12) of the preform 21 of reference, r is a distance from the centre at a cross section of the preform 21, and k is a range measured, which is ordinarily larger than the radius of the preform 21. Therefore, there is the preform 21 in the matching liquid of refractive index 12. The value of the refractive index at the point is $n_1$. The example of the deflection function $\phi(y'')$ found like the above-mentioned is shown in Fig. 5, and the calculation result by equation (7) using the deflection function is shown in Fig. 6.

The measuring point deflects a little not only in the y direction but also the x direction because the measurement is carried out along the long side of the right-angle triangle which is an inclined direction. Although there is no problem when the preform 21 is uniform to the x direction (axis direction) in the field of view, if correct distribution of the refractive index in the vertical cross section of the preform 21 is found, it is required to measure at the condition in which the x value is constant.

Here, the x driving stage 22 is formed like shown in Fig. 2A and Fig. 3A in the present invention. Letting the preform 21 move up and down with the whole of the column 11 attaching the preform 21 in the example of Fig. 2A and letting the preform 21 move right and left with the whole of the matching liquid cell of the refractive index 13, the measurement can be carried out by changing the position along the x axis of the preform 21 in the field of view of the pattern photographing unit 16. By that means, measurement becomes possible at the above-mentioned condition when measurement is carried out so that the x value of the preform 21 comes at a certain place. However, the measuring time becomes long. Then, there is a method: the shape of the refractive index is found once by measuring the preform at the fixed state (it is measured along the inclined line of the optical pattern element 15), then new data is taken letting the preform move along the x axis, and the data is modified by the new data at every stage. According to the method, the accuracy of the measurement is improved at every stage of taking new data by letting the preform 21 move. The method has the advantage of selecting the optimum combination of accuracy and measuring time required by a user because the measurement finishes in a short time if low accuracy is desired and it is possible to obtain a result of high accuracy if a long time measurement is permitted.

In the present embodiment, the deflection function is found detecting a border of a bright portion and dark portion in the pattern, that is the edge portion by pattern process technique. However, the border may become obscure, so as to be hard to detect the edge, because of the diffraction effect when a fine structure from a sedimentary layer appearing often in the preform produced by a VAD method or MCV method is formed. As above-mentioned, portions where deformation of the border by the distribution of the refractive index is projected to a bright portion from a dark portion and to the dark portion from the bright portion, an error may become large if the same threshold (discriminant value) for discriminating the border of the dark portion and the bright portion is used at the two conditions. Then, obtaining fragments of the deflection function detecting edge using the optimum threshold adapting at each state, and these fragments later connect to become one deflection function. For example, a part of the deflection function is found at the portion where the dark portion projects to the bright portion using $v_1$ for the threshold, the remaining part of the deflection function is found at the portion where the bright portion projects to the dark portion using $v_2$ for the threshold, and these are connected later. Actual values of $v_1$ and $v_2$ are determined by the condition of the device, and these values belong to important know-how of the present invention.

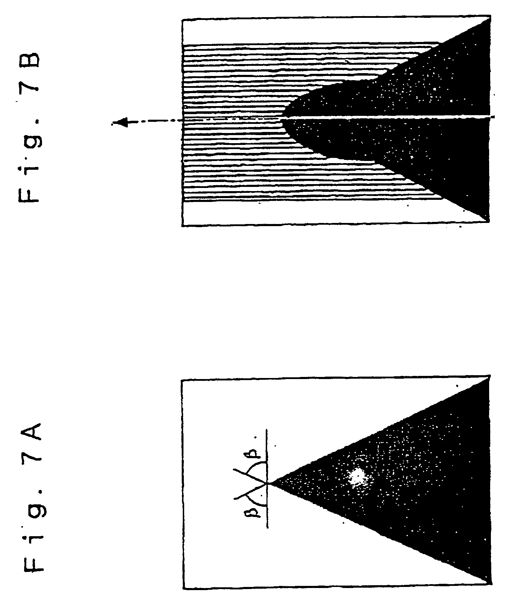

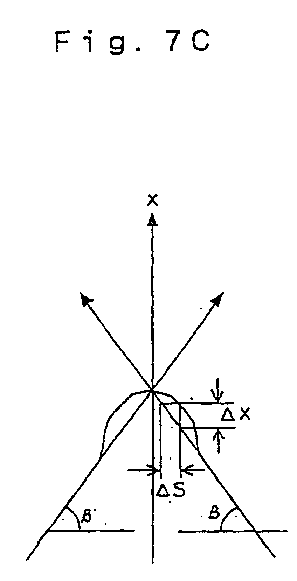

Figs. 7A and 7B are similar to Figs. 4A and 4B of the embodiment but using an isoscelese triangle representation of two values (black and white) for the pattern. In the pattern photographing vertex of the triangle, the optical pattern element 16 is located so as to be positioned at the centre of the preform 21. By such a location, there is not a coexistence of cases such that the dark portion projects to the bright portion like the right-angle triangle and such that the bright portion projects to the dark portion, so that any of them can be limited. So there is no need to change the threshold depending on the portion, the whole deflection function can be found using one threshold, and there is no trouble using a right-angle triangle.

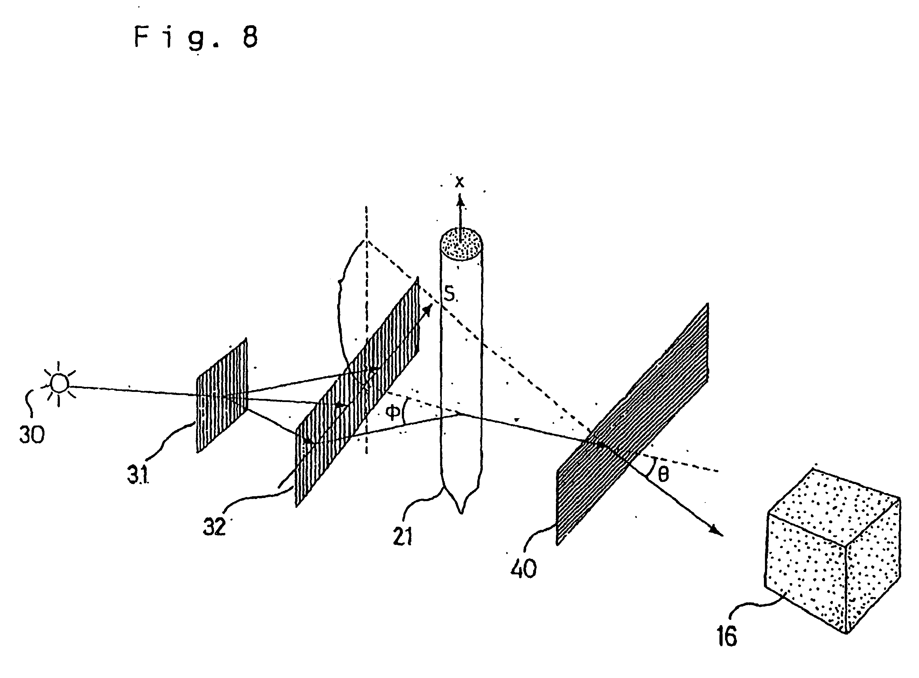

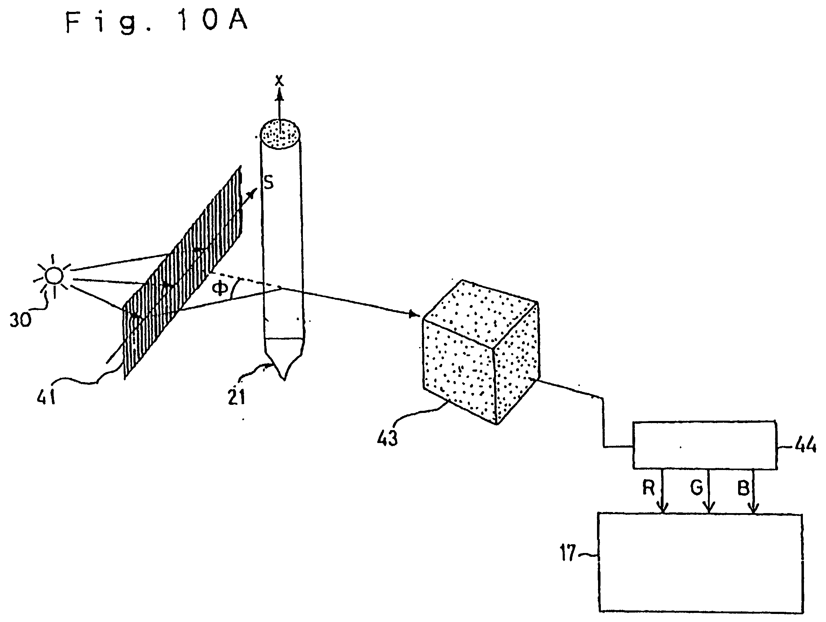

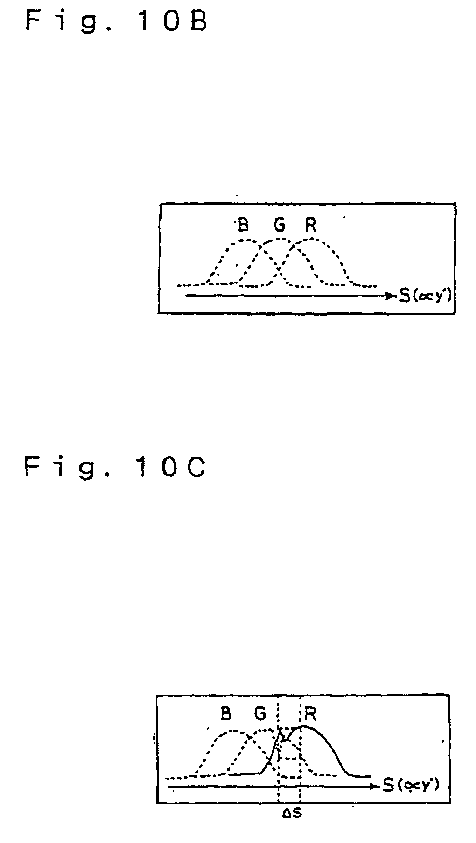

Next, an embodiment using a pattern in which hue (wavelength) changes straightly and continuously in the y axis direction is shown. This system changes colour (wavelengths) of the ray by generating the position of the ray in the optical pattern elements 6 and 15, the generating position can be determined by measuring the colour (wavelength) of the ray. Embodiments of this system are shown in Fig. 8 and Fig. 10A.

In the embodiment of Fig. 8, a ray from a white light source 30 is divided on the S axis (y axis) in space by a diffraction grating 31, the ray is applied to a scattering screen 32, and the scattering screen is used as the optical pattern element 6 or the optical pattern element 15. The diffraction grating 31 can be replaced with a spectral prism.

Although the optical pattern element 15 is photographed permeating the preform 21 by the photographing unit 16, at this time, the ray is diffracted to the S axis (y axis) by putting a scattering screen 40 (or a spectral prism) in front of the photographing unit 16. The ray applied to the scattering screen 40 deflects with diffraction angle θ according to the wavelength. Particularly, a primary diffraction ray conforms to the following equation:

$$\lambda / \Lambda = \sin\theta \qquad (8)$$

Here, λ is the wavelength of the ray, and Λ is the period of the scattering screen 40. In the region where θ is small, θ approximates in proportion to λ. If the wavelength changes continuously and linearly along the y axis, the diffraction angle θ also changes continuously and linearly so that the pattern is photographed deforming diagonally if the preform 21 is not set.

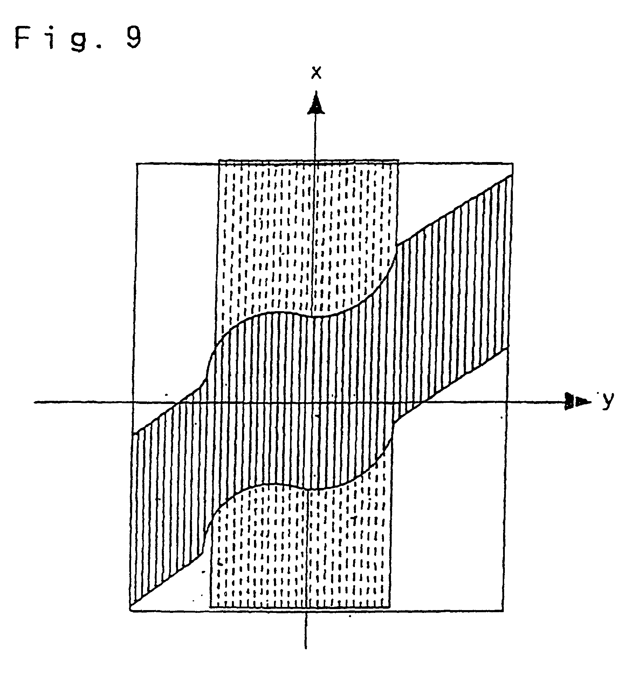

If the generating position of the ray changes when the preform 21 is set, the change is transmitted as a change of wavelength of the ray and the ray comes to a position deflected in space so that the diagonal shape is further deformed. It is possible to find the change of the generating position of the ray from the changing quantity. An example of the projected image obtained by this location is shown in Fig. 9. The method of conducting the change of position of the ray from deflection of the pattern corresponds to the method of Fig. 4C.

Fig. 10A shows a method using a colour photographing unit 43 in another embodiment using the colour of the ray. For an optical pattern element 41, the optical pattern element similar to the one used in Fig. 8 or a colour filter continuous and linear to the S axis (y axis) and about a hue is used. Output of the colour photographing unit 43 can be input to the computer 17 by dividing the wavelengths to R (red), G (green) and B (blue) through a video capture board 44, and the colour of the ray is distinguished by the distribution ratio. In other words, the deflection of the generating position of the ray is found from a change of the distribution ratio at each point generating when the preform 21 is set by finding previously the distribution ratio at each point when the preform 21 is not set. By finding the deflection function from this data and carrying out the numerical conversion with the same method as the above-mentioned, the distribution of the refractive index can be found. Figs. 10A and 10B show an example of RGB distribution ratio at a non-deflected photographed pattern and a method presuming generating position of the ray from the deflection of the RGB distribution ratio in the deflected photographed pattern.

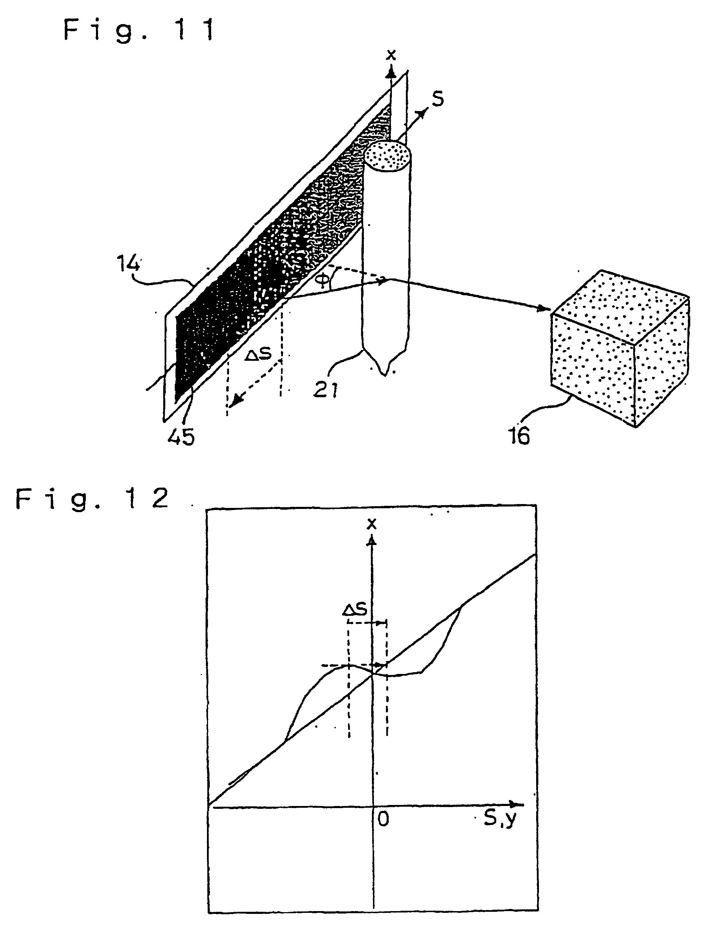

Moreover, Fig. 11 shows an example of an ND filter 45 where transmittance changes linearly along the S axis used for an optical pattern element. An EL light source 14 is used for a light source. As the transmittance changes when the generating position of the ray deflects by measuring brightness of the pattern along the y axis in the embodiment, a curve as in Fig. 2 is obtained. The deflection quantity ΔS can be presumed from the curve using a similar method as the above-mentioned.

The method of measuring the distribution of the internal refractive index for a preform of an optical fibre and the measuring unit of the present invention is described above referring embodiments. The present invention can be modified variously and is not limited by these embodiments. Although the above-mentioned embodiments are on the condition that the deflected pattern is input to the computer converting directly to a projected image signal at the photographing unit, instead of that, the deflected pattern may be input to the computer by photographing once with a picture photographing unit and by converting the projected image using a scanner unit. A scattering board uneven in a scattering characteristic can be located between the optical pattern element and the light source for a light source lighting the optical pattern element except the EL board. Lighting the scattering board with light from a white light source permeating the predetermined colour filter or direct light from a coherent light source such as a light emitting diode and so on, the optical pattern element may be lighted using the scattering board for a secondary light source.

As discussed by the above-description, according to the method of measuring the distribution of the internal refractive index for the optical fibre preform and the measuring unit of the present invention, the optical pattern element is located behind the optical fibre preform, which is cylindrical and has an uneven distribution of refractive index at the inside of the material. The deflected version of the pattern is photographed through the optical fibre preform. By analysing the deflected version of said pattern, the deflection function is found, and the distribution of the refractive index of the optical fibre preform is found based on the deflection function. Therefore, photographing the pattern is possible so as to photograph the deflected pattern if the preform is a high NA optical fibre preform and the angle of deflection of the permeating ray becomes large. Therefore, even high NA optical fibre preform difficult to measure by the conventional method, can be measured to identify the distribution of the refractive index accurately, and that contributes to the improvement of performance of the optical fibre so as to contribute to the development of intelligent society.

The aforegoing description has been given by way of example only and it will be appreciated by a person skilled in the art that modifications can be made without departing from the scope of the present invention.

**Claims**

1.  A method of measuring the distribution of the internal refractive index of an optical fibre preform comprising:

    locating an optical pattern element between a light source and the optical fibre preform;
    using for said optical pattern element a pattern having position data relating to a point in said optical pattern element at which a ray is generated;
    illuminating said optical pattern element with said light source;
    photographing a deflected version of said pattern through the optical fibre preform, said deflected version of said pattern having position data relating to all points in said optical pattern element;
    determining a deflection function by analysing the deflected version of the pattern; and
    determining the distribution of the refractive index of the optical fibre preform based on the deflection function.

2.  A method of measuring the distribution of internal refractive index of an optical fibre preform according to claim 1,
    wherein determining said deflection function comprises ray tracing from the deflected version of said pattern.

3.  A method of measuring the distribution of the internal refractive index of optical fibre preform according to either claim 1 or claim 2,
    wherein said optical pattern element is illuminated with an incoherent light source.

4.  A method of measuring the distribution of the internal refractive index of an optical fibre preform according to any one of claims 1 to 3,
    wherein said pattern comprises a binary representation of a right-angled triangle.

5.  A method of measuring the distribution of the internal refractive index of an optical fibre preform according to claim 4, further comprising:

    finding a border line of variable density optical pattern element determining threshold values which are different partly by adapting to a condition of the pattern;
    finding a border line of the whole by combining the found border line; and
    finding the deflection distribution of the pattern from the whole of the border line.

6.  A method of measuring the distribution of the internal refractive index of an optical fibre preform according to any one of claims 1 to 3,
    wherein said pattern comprises a binary representation of an isosceles triangle.

7.  A method of measuring the distribution of the internal refractive index of an optical fibre preform according to any one of claims 1 to 3,
    wherein a pattern in which hue or wavelength thereof changes continuously is used for said optical pattern element.

8.  A measuring device for measuring the distribution of the internal refractive index of an optical fibre preform, comprising:

    an optical pattern element having a pattern including position data relating to a point in said optical pattern element at which a ray is generated, the optical pattern element being located between an incoherent light source and the optical fibre preform;
    an incoherent light source illuminating the optical pattern element;
    a supporting unit for supporting the optical fibre preform;
    a photographing unit for photographing a deflected version of said pattern through the optical fibre preform, said deflected version of the pattern having position data relating to all points in said optical pattern element, and
    an arithmetic and logic unit for finding the deflection function from the photographed deflected version of said pattern and for finding the distribution of the refractive index of the optical fibre preform based on the deflection function.

9.  A measuring device for measuring the distribution of the internal refractive index of an optical fibre preform according to claim 8,

wherein said incoherent light source comprises a light source and a scattering board located in front of the light source.

10. A measuring device for measuring the distribution of the internal refractive index of an optical fibre preform according to claim 8,
    wherein said incoherent light source comprises an electroluminesence board.

11. A measuring device for measuring the distribution of the internal refractive index of an optical fibre preform according to any one of claims 8 to 10,
    wherein said photographing unit comprises a diaphragm for limiting an aperture, and a mask or a space filter.

**Patentansprüche**

1. Verfahren zum Messen der Verteilung des internen Brechungsindex eines Lichtleitfaservorformlings, umfassend:

    Anordnen eines Optikmusterelements zwischen einer Lichtquelle und dem Lichtleitfaservorformling;
    Verwenden eines Musters mit Positionsdaten bezüglich eines Punktes im Optikmusterelement, an dem ein Strahl erzeugt wird, für das Optikmusterelement;
    Beleuchten des Optikmusterelements mit der Lichtquelle;
    Photographieren einer abgelenkten Version des Musters durch den Lichtleitfaservorformling, wobei die abgelenkte Version des Musters Positionsdaten bezüglich aller Punkte im Optikmusterelement aufweist;
    Ermitteln einer Ablenkungsfunktion durch Analysieren der abgelenkten Version des Musters; und
    Ermitteln der Verteilung des Brechungsindex des Lichtleitfaservorformlings auf der Grundlage der Ablenkungsfunktion.

2. Verfahren zum Messen der Verteilung des internen Brechungsindex eines Lichtleitfaservorformlings nach Anspruch 1,
    wobei die Ermittlung der Ablenkungsfunktion die Strahlverfolgung von der abgelenkten Version des Musters umfasst.

3. Verfahren zum Messen der Verteilung des internen Brechungsindex eines Lichtleitfaservorformlings nach Anspruch 1 oder Anspruch 2,
    wobei das Optikmusterelement mit einer inkohärenten Lichtquelle beleuchtet wird.

4. Verfahren zum Messen der Verteilung des internen Brechungsindex eines Lichtleitfaservorformlings nach irgendeinem der Ansprüche 1 bis 3,
    wobei das Muster eine binäre Darstellung eines rechtwinkligen Dreiecks umfasst.

5. Verfahren zum Messen der Verteilung des internen Brechungsindex eines Lichtleitfaservorformlings nach Anspruch 4, ferner umfassend:

    Ermitteln einer Grenzlinie eines Optikmusterelements mit variabler Dichte, die Schwellenwerte definiert, die verschieden sind, teilweise durch Anpassen an eine Bedingung des Musters;
    Ermitteln einer Grenzlinie der Gesamtheit durch Kombinieren der gefundenen Grenzlinie; und
    Ermitteln der Ablenkungsverteilung des Musters anhand der ganzen Grenzlinie.

6. Verfahren zum Messen der Verteilung des internen Brechungsindex eines Lichtleitfaservorformlings nach irgendeinem der Ansprüche 1 bis 3,
    wobei das Muster eine binäre Darstellung eines gleichschenkligen Dreiecks umfasst.

7. Verfahren zum Messen der Verteilung des internen Brechungsindex eines Lichtleitfaservorformlings nach irgendeinem der Ansprüche 1 bis 3,
    wobei für das Optikmusterelement ein Muster verwendet wird, bei dem sich der Farbton oder die Wellenlänge kontinuierlich ändert.

8. Messvorrichtung zum Messen der Verteilung des internen Brechungsindex eines Lichtleitfaservorformlings, umfassend:

ein Optikmusterelement mit einem Muster, das Positionsdaten bezüglich eines Punktes im Optikmusteretement, an dem ein Strahl erzeugt wird, enthält, wobei das Optikmusterelement zwischen einer inkohärenten Lichtquelle. und dem Lichtleitfaservorformling angeordnet ist;

eine inkohärente Lichtquelle, die das Optikmusterelement beleuchtet;

eine Unterstützungseinheit zum Unterstützen des Lichtleitfaservorformlings;

eine Photographiereinheit zum Photographieren einer abgelenkten Version des Musters durch den Lichtleitfaservorformling, wobei die abgelenkte Version des Musters Positionsdaten bezüglich aller Punkte im Optikmusterelement aufweist, und

eine arithmetische und logische Einheit zum Ermitteln der Ablenkungsfunktion anhand der photographierten abgelenkten Version des Musters und zum Ermitteln der Verteilung des Brechungsindex des Lichtleitfaservorformlings auf der Grundlage der Ablenkungsfunktion.

9. Messvorrichtung zum Messen der Verteilung des internen Brechungsindex eines Lichtleitfaservorformlings nach Anspruch 8,

wobei die inkohärente Lichtquelle eine Lichtquelle und eine vor der Lichtquelle angeordnete Streuplatte umfasst.

10. Messvorrichtung zum Messen der Verteilung des internen Brechungsindex eines Lichtleitfaservorformlings nach Anspruch 8,

wobei die inkohärente Lichtquelle eine Elektrolumineszenzplatte umfasst.

11. Messvorrichtung zum Messen der Verteilung des internen Brechungsindex eines Lichtleitfaservorformlings nach irgendeinem der Ansprüche 8 bis 10,

wobei die Photographiereinheit eine Blende zum Begrenzen einer Apertur, sowie eine Maske oder einen Raumfilter umfasst.

## Revendications

1. Procédé de mesure de la distribution de l'indice de réfraction interne d'une ébauche de fibre optique comprenant les étapes consistant à :

placer un élément de configuration optique entre une source de lumière et une ébauche de fibre optique ;
utiliser pour ledit élément de configuration optique une configuration comprenant des données de position concernant un point dans ledit élément de la configuration optique auquel un rayon est généré ;
éclairer ledit élément de configuration optique avec ladite source de lumière ;
photographier une version déviée de ladite configuration à travers l'ébauche de fibre optique, ladite version déviée de ladite configuration comprenant des données de position concernant tous les points dans ledit élément de configuration optique ;
déterminer une fonction de déviation en analysant la version déviée de la configuration ; et
déterminer la distribution de l'indice de réfraction de l'ébauche de fibre optique sur la base de la fonction de déviation.

2. Procédé de mesure de la distribution de l'indice de réfraction interne d'une ébauche de fibre optique selon la revendication 1,

dans lequel la détermination de ladite fonction de déviation comprend l'étape consistant à tracer un rayon à partir de la version déviée de ladite configuration.

3. Procédé de mesure de la distribution de l'indice de réfraction interne d'une ébauche de fibre optique selon la revendication 1 ou 2,

dans lequel ledit élément de configuration optique est éclairé par une source de lumière incohérente.

4. Procédé de mesure de la distribution de l'indice de réfraction interne d'une ébauche de fibre optique selon l'une quelconque des revendications 1 à 3,

dans lequel ladite configuration comprend une représentation binaire d'un triangle rectangle.

5. Procédé de mesure de la distribution de l'indice de réfraction interne d'une ébauche de fibre optique selon la revendication 4, comprenant en outre les étapes consistant à :

rechercher une frontière d'un élément de configuration optique de densité variable qui détermine des valeurs seuils qui sont partiellement différentes en s'adaptant à une condition de la configuration ;
rechercher une frontière de l'ensemble en combinant la frontière trouvée ; et
rechercher la distribution de déviation de la configuration à partir de l'ensemble de la frontière.

**6.** Procédé de mesure de la distribution de l'indice de réfraction interne d'une ébauche de fibre optique selon l'une quelconque des revendications 1 à 3,
dans lequel ladite configuration comprend une représentation binaire d'un triangle isocèle.

**7.** Procédé de mesure de la distribution de l'indice de réfraction interne d'une ébauche de fibre optique selon l'une quelconque des revendications 1 à 3,
dans lequel une configuration, dans laquelle la tonalité chromatique ou la longueur d'onde de celle-ci change de manière continue, est utilisée pour ledit élément de configuration optique.

**8.** Dispositif de mesure destiné à mesurer la distribution de l'indice de réfraction interne d'une ébauche de fibre optique, comprenant :

un élément de configuration optique comprenant une configuration qui comporte des données de position concernant un point dans ladite configuration optique auquel un rayon est généré, l'élément de configuration optique étant placé entre une source de lumière incohérente et l'ébauche de fibre optique ;
une source de lumière incohérente éclairant l'élément de configuration optique ;
une unité de support destinée à soutenir l'ébauche de fibre optique ;
une unité photographique destinée à photographier une version déviée de ladite configuration à travers l'ébauche de fibre optique, ladite version déviée de la configuration comportant des données de position concernant tous les points dans ledit élément de configuration optique, et
une unité arithmétique et logique destinée à rechercher la fonction de déviation à partir de la version déviée photographiée de ladite configuration et destinée à rechercher la distribution de l'indice de réfraction de l'ébauche de fibre optique sur la base de la fonction de déviation.

**9.** Dispositif de mesure destiné à mesurer la distribution de l'indice de réfraction interne d'une ébauche de fibre optique selon la revendication 8,
dans lequel ladite source de lumière incohérente comprend une source de lumière et une plaque de diffusion placée en face de la source de lumière.

**10.** Dispositif de mesure destiné à mesurer la distribution de l'indice de réfraction interne d'une ébauche de fibre optique selon la revendication 8,
dans lequel ladite source de lumière incohérente comprend une plaque électroluminescente.

**11.** Dispositif de mesure destiné à mesurer la distribution de l'indice de réfraction interne d'une ébauche de fibre optique selon l'une quelconque des revendications 8 à 10,
dans lequel ladite unité photographique comprend un diaphragme destiné à limiter une ouverture, et un masque ou un filtre spatial.

Fig. 1A

Fig. 1B

# Fig. 2A

# Fig. 2B

Fig. 3A

Fig. 3B

EP 0 994 341 B1

Fig. 4 A

Fig. 4 B

# F i g . 4 C

# F i g. 5

# F i g. 6

Fig. 7A

Fig. 7B

EP 0 994 341 B1

# Fig. 7C

Fig. 8

Fig. 9

Fig. 10A

F i g .  1 0 B

F i g .  1 0 C

Fig. 11

Fig. 12

24